# EUROPÄISCHE PATENTSCHRIFT

(11) **EP 2 099 341 B1**
(45) Veröffentlichungstag und Bekanntmachung des Hinweises auf die Patenterteilung: **06.07.2011**
(21) Anmeldenummer: 07855661.0
(22) Anmeldetag: 11.12.2007
(51) Int. Cl.: A47J 31/44, A47J 31/46, F16K 11/02

(54) **GETRÄNKEBEREITUNGSMASCHINE MIT QUETSCHVENTIL**
BEVERAGE PREPARATION MACHINE WITH A PINCH VALVE
APPAREIL DE PRÉPARATION DES BOISSONS AVEC UNE SOUPAPE À PINCE

(30) Priorität: 12.12.2006 CH 20262006
(43) Veröffentlichungstag der Anmeldung: 16.09.2009
(73) Patentinhaber: JURA ELEKTROAPPARATE AG, 4626 Niederbuchsiten (CH)
(72) Erfinder: REYHANLOO, Shahryar, 4573 Lohn Ammansegg (CH)
(74) Vertreter: EGLI-EUROPEAN PATENT ATTORNEYS
(86) Internationale Anmeldenummer: PCT/CH2007/000621
(87) Internationale Veröffentlichungsnummer: WO 2008/071024

(56) Entgegenhaltungen:
- DE-U1- 8 815 997
- US-A- 2 985 192
- US-A- 3 517 859
- US-A- 4 484 599

## Beschreibung

Die Erfindung betrifft eine Getränkebereitungsmaschine mit wenigstens einem Quetschventil im Fluidleitungssystem.

Die Erfindung betrifft insbesondere eine Getränkebereitungsmaschine der oben genannten Art, also beispielsweise eine Kaffee- oder Espressomaschine, bei der eine Flüssigkeits- oder Fluidkomponente auf verschiedene Ausläufe umgeleitet werden muss, oder die auch zur Herstellung von Getränken mit zwei verschiedenen Flüssigkeitskomponenten, wie z.B. Milchkaffee, besonders geeignet ist.

So gibt es Gerätetypen von Espressomaschinen bei denen die Ausgabe von Kaffee oder Cappuccino über jeweils verschiedene Ausläufe an verschiedenen Ausgabeplätzen erfolgt. Hier braucht es eine Umschaltung des Ausgabepfades für Kaffee.

Im Fall der Herstellung von Milchkaffee sind die beiden Flüssigkeitskomponenten Kaffee und Milch, die jeweils aus verschiedenen Quellen oder Behältern einem einzigen oder auch verschiedenen Ausläufen zugeführt werden. Hier braucht es eine Umschaltung auf der Seite der Zuleitung oder Zuführung.

Zu diesem Zweck müssen im Fluidleitungssystem der Getränkebereitungsmaschine Schaltkomponenten mit geeigneten Ventil- und/oder Steuerungsfunktionen vorhanden sein.

Der Begriff "Ventil- und/oder Steuerungsfunktionen" wird im folgenden in der nachstehenden Bedeutung verwendet:
- Unter Ventilfunktion versteht man eine Funktion, bei der ein Fluiddurchgang ein-, aus- oder umgeschaltet wird.
- Unter Steuerungsfunktion versteht man eine Funktion, bei der eine Fluiddurchlaufmenge kontrolliert verkleinert oder vergrössert wird, was natürlich Ventilfunktionen miteinschliessen kann.

Bekannte Schaltkomponenten in Getränkebereitungsmaschinen sind die sehr häufig eingesetzten Magnetventile. Magnetventile haben aber eine Reihe von Nachteilen, die unter Umständen unerwünscht sind. Sie sind schwer und teuer, in der Regel auch relativ verschmutzungsempfindlich und müssen zudem in mindestens einer Betätigungsstellung ständig unter Strom gehalten werden, was dann auch zu einer zunehmenden Erwärmung der Elektromagnete führt.

Quetschventile sind an sich ebenfalls bekannt. Sie werden in manchen Fällen wegen der sehr viel geringeren Verschmutzungsempfindlichkeit bevorzugt, weil das in einem quetschbaren Schlauch geführte Fluidmedium keinen Kontakt zu der Ventilmechanik hat. Sie eignen sich deshalb auch für verschiedenste Fluidmedien und insbesondere auch zur Steuerung von Durchflussmengen.

Dokument US 3 517 859 A beschreibt eine Getränkebereitungsmaschine mit einem Quetschventil.

Die Aufgabe der Erfindung besteht somit darin, eine verbesserte Getränkebereitungsmaschine anzugeben, bei der wenigstens ein Quetschventil im Fluidleitungssystem versatilere Funktionen bei der Verteilung und Durchflussmengenteuerung der Fluidmedien ermöglicht.

Diese Aufgabe wird durch die Merkmale des Patentanspruchs 1 gelöst.

Durch den Einsatz eines Quetschventils werden zunächst die Quetschventilen eigenen Vorteile auf die Getränkebereitungsmaschine übertragen. Die Getränkebereitungsmaschine wird leichter und kostengünstiger herstellbar. Ein Quetschventil ist sehr viel weniger verschmutzungsempfindlich und dadurch auch hygienischer und zudem sind auch Betätigungsmechanismen möglich (auf die untenstehend noch eingegangen wird), die nur gerade während der Umschaltung bzw. mechanischen Verstellung elektrische Energie verbrauchen.

Durch die Bauweise mit wenigstens zwei Fluiddurchgangsleitungen lassen sich vielfältige Ventil- und Steuerungsfunktionen realisieren.

Erfindungsgemäß ist dabei ein Betätigungsmechanismus zur gekoppelten Aktivierung der Ventil- und/oder Steuerungsfunktionen der beiden Fluiddurchgangsleitungen vorhanden. Bei Ein-, Aus- und Umschaltungen der Fluidpfade lassen sich die Fluiddurchlassmengen dosiert und bedarfsgerecht steuern. Die Fluiddurchlassmengensteuerung ist dabei gegenläufig (eine der Fluiddurchgangsleitungen wird geöffnet während die andere geschlossen wird) vorgesehen sein.

Eine mit den vorgesehenen Mitteln realisierte Umschaltfunktion (gegenläufige Steuerung der Fluiddurchgangsmengen) kann auch als eine (in den zwei Fluiddurchgangsleitungen) gegenläufige Drosselungsfunktion gesehen werden. Somit können Fluidströme nicht nur stetig anwachsend eingeschaltet oder stetig abschwellend ausgeschaltet, sondern auch gegenläufig stetig verändernd umgeschaltet werden.

Erfindungsgemäß wird ein linear arbeitender Betätigungsmechanismus mit einem Schrittmotorantrieb verwendet. Beim linear arbeitenden Betätigungsmechanismus beinhaltet der Betätigungsmechanismus dann vorteilhafterweise einen oder mehrere Quetschkeile. Beim rotativ arbeitenden Betätigungsmechanismus beinhaltet der Betätigungsmechanismus dann vorteilhafterweise mindestens eine Exzenterscheibe.

Der Einsatz eines Schrittmotors ermöglicht es, trotz kompakten Abmessungen, eine im Vergleich zu Elektromagneten grössere Betätigungskraft aufzubringen. Daraus ergeben sich Platz- und Kosteneinsparungen. Es können längere Schaltwege realisiert werden, wodurch grössere Schlauchquerschnitte einsetzbar sind, was wiederum strömungstechnische Vorteile aufweisen kann. Zudem können geeignete gängige Schrittmotoren dank Selbsthaltung auch in den Quetschstellungen stromlos gehalten werden. Ein Fluidstrom kann dadurch über unbestimmte Zeit umgeschaltet bleiben.

Insgesamt kann die erfindungsgemässe Ventilart nicht nur bei der Kaffeeumleitung eingesetzt werden, sondern auch bei anderen Fluidmedien wie beispielsweise Wasser, Dampf oder Milch.

Im folgenden wird die Erfindung anhand von Zeichnungen näher erläutert.

In den Zeichnungen zeigen:
- Fig. 1: ein Beispiel einer Kaffeemaschine mit einem Fluidleitungssystem mit einem erfindungsgemässen Quetschventil in schematischer Darstellung,
- Fig. 2a-c: ein erfindungsgemässes Quetschventil mit zwei Fluiddurchgangsleitungen und linearem Betäti- gungsmechanismus in drei Schaltstellungen (X,Y,Z),
- Fig. 3a-c: ein alternative Ausführungsform eines Quetsch- ventils mit zwei Fluiddurchgangsleitungen und einem Exzenter-Betätigungsmechanismus in drei Schaltstellungen (X,Y,Z),
- Fig. 4: eine detaillierte Darstellung eines Quetschven- tils gemäss Fig. 2 mit Umschaltfunktion und gemeinsamem Zufluss,
- Fig. 5a-c: verschiedene Bauvarianten eines Quetschventils gemäss Fig. 4, wobei a) eine Bauvariante B mit Druckfeder und unab- hängigen Fluiddurchgangsleitungen ist, b) eine Bauvariante C ohne Druckfeder ist, und c) eine weitere Bauvariante D mit Druckfeder und einer Vielzahl von Fluiddurchgangsleitungen ist.

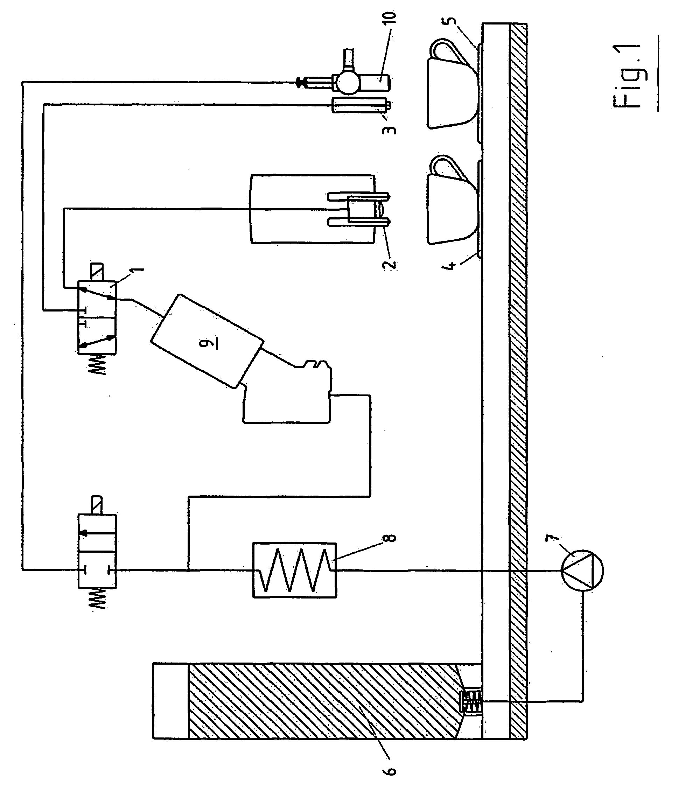

Die Fig. 1 zeigt ein Beispiel einer Kaffeemaschine mit einem Fluidleitungssystem mit einem erfindungsgemässen Quetschventil 1 in schematischer Darstellung. Im vorliegenden Beispiel erfolgt die Ausgabe von Kaffee oder Cappuccino über jeweils verschiedene Ausläufe 2,3 an verschiedenen Ausgabeplätzen 4,5. Abhängig von der Wahl der Getränkeart (Kaffee oder Cappuccino) braucht es somit eine Umschaltung des Ausgabepfades für Kaffee.

Ein von einem Wassertank 6 über eine Pumpe 7 gespiesener Durchlauferhitzer 8 führt einer Brüheinheit 9 Heisswasser zur Erzeugung von Kaffee zu. Die Umschaltung des Ausgabepfades für Kaffee erfolgt mit dem Quetschventil 1. Im Falle der Herstellung eines Cappuccinos wird der Durchlauferhitzer im Anschluss an die Kaffeeausgabe noch zur Erzeugung von Dampf für die Herstellung des Milchschaums mittels eines Milchschäumers 10 verwendet.

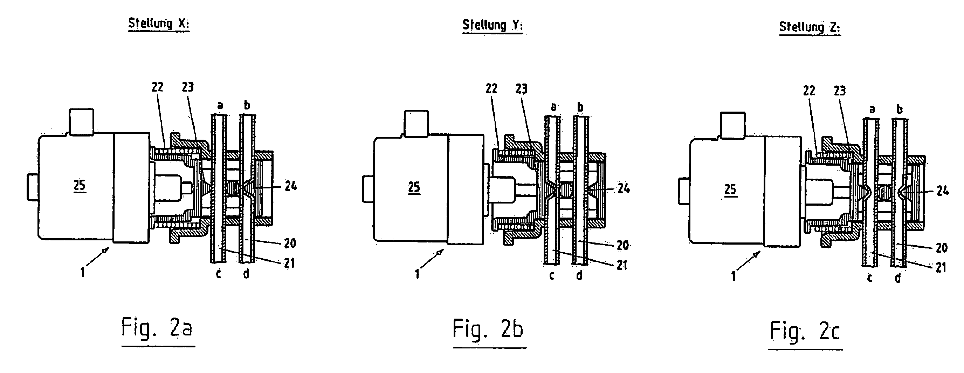

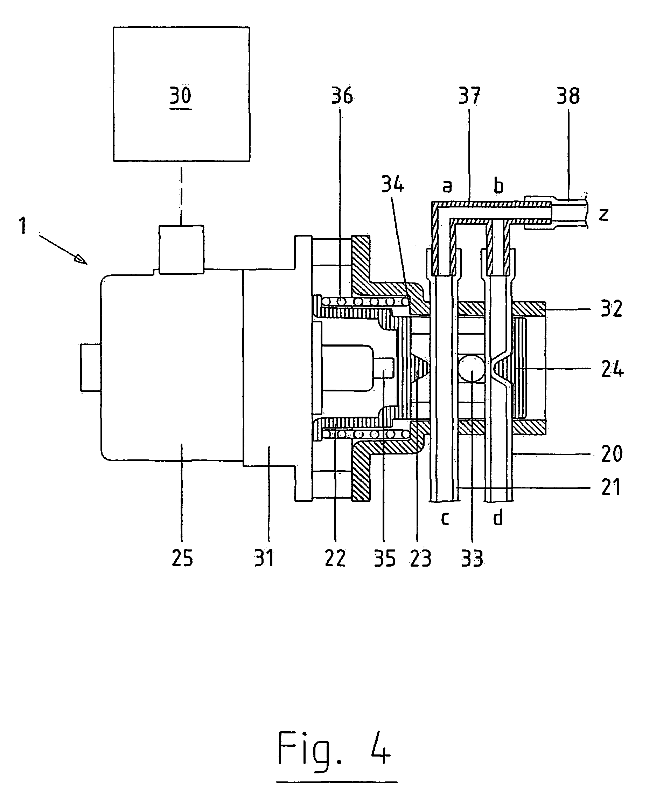

Die Figuren 2a-c zeigen ein erfindungsgemässes Quetschventil 1 mit zwei Fluiddurchgangsleitungen 20, 21 und einem linearem Betätigungsmechanismus in drei Schaltstellungen (X,Y,Z). Die Fluiddurchgangsleitungen 20, 21 sind als Ventilschläuche ausgebildet deren Ein/Ausgänge mit a und c beziehungsweise b und d bezeichnet sind. Beidseits der Fluiddurchgangsleitungen 20, 21 befinden sich an einem Ventilumschalter 22 angebrachte Quetschkeile 23, 24. Der Ventilumschalter 22 ist mittels eines Linearmotors 25 linear verschiebbar. Durch die lineare Verschiebung des Ventilumschalters 22 kann mittels der Quetschkeile 23, 24 die eine oder die andere Fluiddurchgangsleitung 21, 20 zugequetscht und so verschlossen werden. Siehe dazu die Figuren 2a (Schaltstellung X / Fluiddurchgangsleitung 20 gesperrt) und 2b (Schaltstellung Y / Fluiddurchgangsleitung 21 gesperrt). In der Figur 2c ist noch eine Mittelstellung (Schaltstellung Z) gezeigt, in der weder die Fluiddurchgangsleitung 20 noch die Fluiddurchgangsleitung 21 ganz gesperrt ist. Durch die hier gezeigte gegenläufige Koppelung der Verschlussmechanismen mit den Quetschkeilen 23 und 24 lässt sich das Quetschventil 1 auch zur Umschaltung bzw. Umleitung eines Fluidstromes verwenden. Diese Anwendung ist in der Figur 4 im Detail beschrieben und sie liegt auch der schematischen Darstellung gemäss Fig. 1 zugrunde.

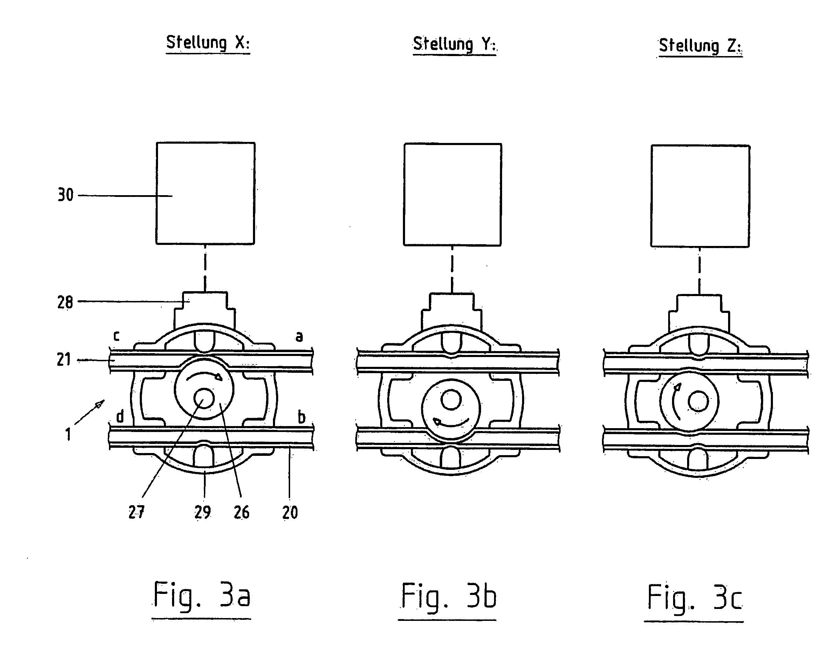

Die Figuren 3a-c zeigen eine alternative Ausführungsform eines Quetschventils mit zwei Fluiddurchgangsleitungen 20, 21 und einem Exzenter-Betätigungsmechanismus in drei Schaltstellungen (X,Y,Z). Die Fluiddurchgangsleitungen 20, 21 sind als Ventilschläuche ausgebildet deren Ein/Ausgänge (in Entsprechung zur Fig. 2) mit a und c beziehungsweise b und d bezeichnet sind. Zwischen den Fluiddurchgangsleitungen 20, 21 befindet sich eine Exzenterscheibe 26, die über eine Antriebsachse 27 von einem weiteren Schrittmotor 28 angetrieben wird. Durch die Drehung der Exzenterscheibe 26 um die Antriebsachse 27 kann die eine oder die andere Fluiddurchgangsleitung 21, 20 zugequetscht und so verschlossen werden. Siehe dazu die Figuren 3a (Schaltstellung X / Fluiddurchgangsleitung 21 gesperrt) und 2b (Schaltstellung Y / Fluiddurchgangsleitung 20 gesperrt). In der Figur 3c ist noch eine Mittelstellung (Schaltstellung Z) gezeigt, in der weder die Fluiddurchgangsleitung 20 noch die Fluiddurchgangsleitung 21 ganz gesperrt ist. Auch hier lässt sich durch die gezeigte gegenläufige Koppelung des Verschlussmechanismus mit der Exzenterscheibe 26 das Quetschventil 1 zur Umschaltung bzw. Umleitung eines Fluidstromes verwenden. Die Fluiddurchgangsleitungen 20, 21 und die Exzenterscheibe 26 befinden sich in einem geeignet ausgebildeten Ventilgehäuse 29. Zur Steuerung des Schrittmotors 28 ist hier noch die notwendige Verbindung zu einer Steuerelektronik 30 gezeigt.

Die Schaltstellungen Z gemäss den Figuren 2 und 3 sind auch geeignet, um die Ventilschläuche (Fluiddurchgangsleitungen) zu entlasten. Dies kann bei einer längeren Lagerung des Quetschventils 1 bzw. der Getränkebereitungsmaschine mit einem derartigen Quetschventil ohne Betrieb von Vorteil sein.

Die Figur 4 zeigt eine detailliertere Darstellung des Quetschventils 1 gemäss Fig. 2 mit Umschaltfunktion und gemeinsamem Zufluss Z. Einige der wesentlichen Bestandteile wurden bereits in der Beschreibung zur Figur 2 dargelegt. Die folgenden Ausführungen haben deshalb ergänzenden Charakter:

Der Schrittmotor 25 ist mit einem Schrittmotorflansch 31 mit einem Ventilgehäuse 32 verbunden. Ein Zwischenbolzen 33 ist am Ventilgehäuse 32 eingesteckt und fixiert. Der Ventilumschalter 22 ist linear und axial im Ventilgehäuse 32 bewegbar. Eine radiale Abstufung im Ventilgehäuse 32 bildet einen Ventilumschalteranschlag 34. Durch den Ventilumschalteranschlag 34 und den Zwischenbolzen 33 ist die Zusammenpress- bzw. Quetschbewegung für die Fluiddurchgangsleitung 21 begrenzbar (die Quetschung des Ventilschlauchs findet in diesem Fall zwischen dem Quetschkeil 23 und dem Zwischenbolzen 33 statt). Durch eine entsprechende Ansteuerung des Schrittmotors 25 mit der Steuerelektronik 30 kann eine Hubstange 35 linear und axial verstellt werden. Die Hubstange 35 überträgt die axiale Bewegung beim Ausfahren auf den Ventilumschalter 22. In der Ausgangsposition (wie hier dargestellt) ist der Durchgang durch die Fluiddurchgangsleitung 20 in Richtung b-d durch die Rückstellkraft einer Druckfeder 36 und mittels des Quetschkeiles 24 gesperrt. Um die Endposition (nicht dargestellt) zu erreichen, muss mittels des Schrittmotors 25 die Hubstange 35 und damit der Ventilumschalter 22 mit den Quetschkeilen 23 und 24 gegen die Kraft der Druckfeder 36 axial (nach rechts) verschoben werden, wobei schrittweise die Fluiddurchgangsleitung 21 in Richtung a-c verschlossen und die Fluiddurchgangsleitung 20 in Richtung b-d geöffnet wird. In diesem Beispiel sind die Eingänge a, b der Fluiddurchgangsleitungen 21, 20 mit einem Verteilungsanschluss 37 verbunden. Am Verteilungsanschluss 37 kann ein Zufuhrschlauch 38 für den Zufluss Z befestigt sein.

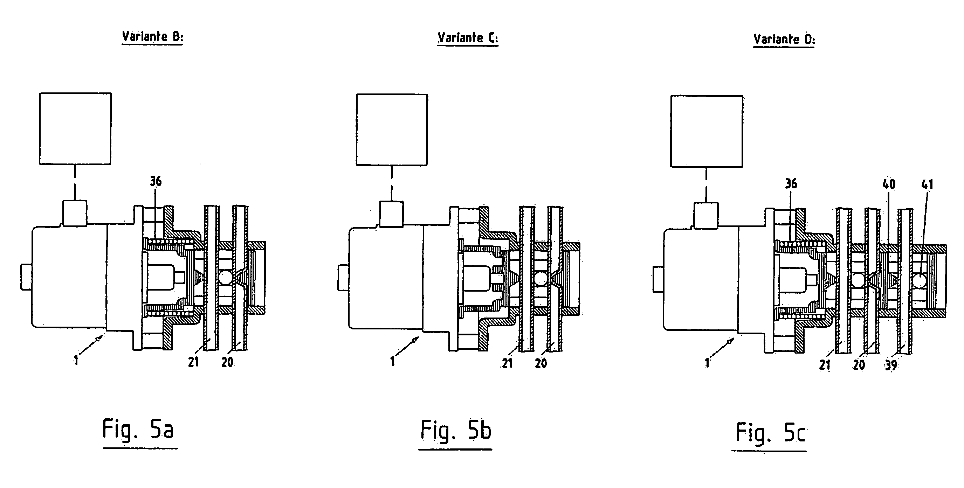

Die Figuren 5a-c zeigen schliesslich noch verschiedene weitere mögliche Bauvarianten eines Quetschventils von der prinzipiellen Bauart A gemäss Fig. 4, wobei
- Fig. 5a): eine Bauvariante B mit Druckfeder und unabhängigen Fluiddurchgangsleitungen ist,
- Fig. 5b): eine Bauvariante C ohne Druckfeder ist, und
- Fig. 5c): eine Bauvariante D mit Druckfeder und einer Viel- zahl von Fluiddurchgangsleitungen ist.

Bei der prinzipiellen Bauart A gemäss Fig. 4 kann der Verteilungsanschluss 37 eingangs- oder ausgangsseitig angeordnet sein.

Bei der Bauart gemäss Fig. 5a (Variante B) sind die Fluiddurchgangsleitungen 20, 21 unabhängig geführt. Es besteht nach wie vor eine Koppelung der Absperrfunktionen in den beiden Fluiddurchgangsleitungen (die Absperr- bzw. Öffnungsfunktionen erfolgen gleichzeitig, es erfolgt aber keine Pfadumschaltung).

Bei der Bauart gemäss Fig. 5b (Variante C) wird das Quetschventil 1 ohne die Druckfeder 36 betrieben. Dazu wird die Hubstange 35 fix mit dem Ventilumschalter 22 verbunden. Da es Schrittmotorantriebe gibt, die in jeder Position stromlos gehalten werden können, kann oftmals diese aus weniger Einzelteilen bestehende Bauvariante in Betracht gezogen werden. Bei Bauweisen mit Druckfedern kann hingegen die mit der Druckfeder aufgebrachte Vorspannung zur Erzielung mechanischer Grundzustände genutzt werden.

Bei der Bauart gemäss Fig. 5c (Variante D) weist das Quetschventil 1 eine Vielzahl von Fluiddurchgangsleitungen auf und ist modular erweiterbar. Neben den bisherigen zwei Fluiddurchgangsleitungen 20, 21 weist dieses Beispiel eine weitere Fluiddurchgangsleitung 39 sowie einen weiteren Quetschkeil 40 und einen weiteren Zwischenbolzen 41 auf. Somit sind hier (sofern man vom gezeigten Ruhezustand ausgeht) zwei "schliessende Durchgänge" und ein "öffnender Durchgang" vorhanden. Wegen der modularen Erweiterbarkeit sind natürlich beliebige weitere Schaltkombinationen realisierbar.

## Patentansprüche

1. Getränkebereitungsmaschine mit wenigstens einem Quetschventil (1) im Fluidleitungssystem, wobei das Quetschventil (1) wenigstens zwei Fluiddurchgangsleitungen (20, 21) aufweist und zur Ausübung von Ventil- und/oder Steuerungsfunktionen auf die Fluiddurchgangsleitungen (20, 21) ausgebildet ist, **dadurch gekennzeichnet, dass** das Quetschventil (1) einen linearen Betätigungsmechanismus der Ventil- und/oder Steuerungsfunktionen der Fluiddurchgangsleitungen (20, 21) aufweist, der zur gekoppelten Aktivierung der Fluiddurchgangsleitungen (20, 21) angepasst ist, so dass wenigstens eine Fluiddurchgangsleitung (20, 21) geöffnet wird während gleichzeitig wenigstens eine andere Fluiddurchgangsleitung (20, 21) geschlossen wird.

2. Getränkebereitungsmaschine nach Patentanspruch 1, **dadurch gekennzeichnet, dass** die gekoppelte Aktivierung der Ventil- und/oder Steuerungsfunktion eine Umschaltfunktion oder zumindest eine gegenläufige Drosselungsfunktion hat.

3. Getränkebereitungsmaschine nach Patentanspruch 1 oder 2, **dadurch gekennzeichnet, dass** der lineare Betätigungsmechanismus ein linearer Schrittmotorantrieb ist.

## Claims

1. A beverage preparation machine comprising at least one squeeze valve (1) in the fluid line system, wherein the squeeze valve (1) encompasses at least two fluid passage lines (20, 21) and is embodied for carrying out valve and/or control functions on the fluid passage lines (20, 21), **characterized in that** the squeeze valve (1) encompasses a linear actuating mechanism of the valve and/or control functions of the fluid passage lines (20, 21), which is adapted for the coupled activation of the fluid passage lines (20, 21), so that at least one fluid passage line (20, 21) is opened while at least another fluid passage line (20, 21) is closed at the same time.

2. The beverage preparation machine according to patent claim 1, **characterized in that** the coupled activation of the valve and/or control function has a switch-over function or at least a limiting function in the opposite direction.

3. The beverage preparation machine according to patent claim 1 or 2, **characterized in that** the linear actuating mechanism is a linear stepping motor drive.

## Revendications

1. Machine pour la préparation de boissons, avec au moins un robinet-vanne à manchon déformable (1) dans le système de conduites de fluide, dans laquelle le robinet-vanne à manchon déformable (1) comporte au moins deux conduites de passage de fluide (20, 21) et est conçu pour exercer des fonctions de vanne et/ou de commande sur les conduites de passage de fluide (20, 21), **caractérisée en ce que** le robinet-vanne à manchon déformable (1) comporte un mécanisme d'actionnement linéaire des fonctions de vanne et/ou de commande des conduites de passage de fluide (20, 21), qui est adapté pour l'activation couplée des conduites de passage de fluide (20, 21), de sorte qu'au moins une conduite de passage de fluide (20, 21) est ouverte pendant qu'une autre conduite de passage de fluide (20, 21) est simultanément fermée.

2. Machine pour la préparation de boissons selon la revendication 1, **caractérisée en ce que** l'activation couplée de la fonction de vanne et/ou de commande possède une fonction de commutation ou au moins une fonction d'étranglement en sens inverse.

3. Machine pour la préparation de boissons selon la revendication 1 ou 2, **caractérisée en ce que** le mécanisme d'actionnement linéaire est un entraînement de moteur pas à pas linéaire.
